# FASCICULE DE BREVET EUROPEEN

(11) **EP 0 390 637 B1**
(45) Date de publication et mention de la délivrance du brevet: **02.03.1994**
(21) Numéro de dépôt: 90400722.6
(22) Date de dépôt: 16.03.1990
(51) Int. Cl.: G21C 17/00, G21C 7/08, G01B 7/12

(54) **Procédé et dispositif de contrôle dimensionnel et géométrique d'éléments de guidage et de positionnement des équipements internes supérieurs d'un réacteur nucléaire à eau sous pression**
Verfahren und Vorrichtung zur Dimensions- und Geometrieüberprüfung von Führungs- und Positionierungselementen in den oberen Einbauten eines Druckwasser-Kernreaktors
Method and device for dimensional and geometric control of guides and positioning components of nuclear pressurised water reactor upper internals

(30) Priorité: 29.03.1989 FR 8904082
(43) Date de publication de la demande: 03.10.1990
(73) Titulaire: FRAMATOME, 92400 Courbevoie (FR)
(72) Inventeur: Cartry, Jean-Pierre, F-69003 Lyon (FR)
(74) Mandataire: Bouget, Lucien

(56) Documents cités:
- EP-A- 0 055 647
- FR-A- 2 202 586
- FR-A- 2 304 149
- GB-A- 2 085 594
- US-A- 4 647 422
- US-A- 4 699 750

## Description

L'invention concerne un procédé et un dispositif de contrôle dimensionnel et géométrique d'éléments de guidage et de positionnement des équipements internes supérieurs d'un réacteur nucléaire à eau sous pression.

Les réacteurs nucléaires à eau sous pression comportent des assemblages combustibles prismatiques juxtaposés constituant le coeur du réacteur dans lequel se produit le dégagement de chaleur fourni par la fission des pastilles d'uranium enrichi contenues dans les crayons constituant les assemblages.

La régulation ou l'arrêt de la réaction nucléaire fournissant la production de chaleur qui est transmise au fluide caloporteur constitué par de l'eau sous pression sont réalisés par des grappes de réglage constituées chacune par un faisceau de vingt-quatre crayons absorbants contenant du carbure de bore qui absorbe facilement les neutrons. Ces grappes de contrôle sont introduites dans le réseau des vingt-quatre tubes-guides d'un assemblage combustible constituant également l'ossature de l'assemblage. Cette ossature comporte des grilles fixées sur les tubes-guides et délimitant un réseau dans lequel sont placés et maintenus les crayons combustibles.

Les grappes de contrôle sont déplacées dans le coeur du réacteur suivant sa direction verticale, de manière à réguler le réacteur nucléaire, en fonction de l'appauvrissement de l'uranium enrichi des pastilles contenues dans les crayons combustibles et des variations de la demande d'énergie du réseau.

Le déplacement des grappes de contrôle suivant la direction axiale du tube-guide des assemblages combustibles est réalisé par des mécanismes de commande placés sur le couvercle de la cuve du réacteur. Ces grappes de contrôle se déplacent de manière fréquente si bien qu'après un long cycle de fonctionnement, les gaines des crayons absorbants des grappes de contrôle peuvent subir une certaine usure.

Les grappes de contrôle sont d'autre part guidées, au-dessus du coeur, par des tubes de guidage faisant partie des équipements internes supérieurs du réacteur et disposés dans l'alignement des assemblages combustibles dans lesquels on introduit les grappes de contrôle.

Les tubes de guidage des équipements internes supérieurs du réacteur comportent des cartes de guidage placées à des intervalles réguliers suivant une partie substantielle de la longueur du tube de guidage et des dispositifs de guidage continu occupant la partie inférieure du tube de guidage.

Après un temps de fonctionnement plus ou moins long, le frottement des gaines des crayons absorbants des grappes de contrôle dans les éléments de guidage peut entraîner une usure et plus spécialement une ovalisation de l'alésage des éléments de guidage qui sont reliés entre eux par des ouvertures permettant le passage des membranes sur lesquelles sont fixés les crayons absorbants.

Le phénomène d'usure peut être amplifié de façon qu'il produise une usure prématurée des éléments de guidage, sous l'effet des vibrations des gaines des crayons absorbants à l'intérieur des cartes et des fourreaux continus de guidage, engendrées par le passage du fluide de refroidissement, notamment lors des transitoires.

On connaît des dispositifs de contrôle de l'ovalisation d'un tube de faible diamètre et de grande longueur, tels que décrits par exemple dans le FR-A-2.202.586, mettant en oeuvre des mesures de capacités de condensateurs constitués par une armature métallique fixée sur un support isolant qui est introduit dans le tube et une surface du tube séparée de l'armature par une couche de diélectrique d'épaisseur variable. Pour effectuer des mesures d'ovalisation, on fait tourner le support à l'intérieur du tube, autour de son axe et on compare les mesures obtenues pour différentes positions du support.

Ce dispositif et le procédé de mesure correspondant ne sont pas adaptés au cas du contrôle de tubes de guidage des équipements internes d'un réacteur nucléaire, dans la mesure où il est nécessaire ou souhaitable de réaliser le contrôle de tous les canaux de guidage d'un tube en une seule opération.

On ne connaissait donc pas jusqu'ici de procédé ou de dispositif parfaitement adaptés au contrôle dimensionnel et géométrique des éléments de guidage des grappes de contrôle, les équipements internes du réacteur nucléaire étant sous eau, à l'intérieur de la cuve ou de la piscine du réacteur ou encore à l'air libre sur un stand de réparation à proximité de la cuve du réacteur.

D'autre part, les tubes de guidage des équipements internes supérieurs sont maintenus et placés dans l'alignement des assemblages combustibles par des broches de guidage engagées dans des ouvertures de la plaque inférieure des équipements internes supérieurs constituant la plaque supérieure du coeur. L'entraxe de ces broches de guidage doit être contrôlé de façon très précise mais on ne connaissait pas jusqu'ici de procédé et de dispositif permettant d'effectuer ce contrôle sur l'extrémité inférieure des tubes de guidage portant les broches venant s'engager dans la plaque inférieure des équipements internes supérieurs du réacteur.

Le but de l'invention est donc de proposer un procédé de contrôle dimensionnel et géométrique d'éléments de guidage et de positionnement des équipements internes supérieurs d'un réacteur nucléaire à eau sous pression, comportant un axe de symétrie, par mesure de capacités entre un moyen de mesure et une surface des éléments de guidage et de positionnement et comparaison des valeurs mesurées, qui soit d'une grande précision et qui permette d'effectuer le contrôle sur les équipements internes supérieurs, aussi bien dans le cas où ces éléments se trouvent sous eau dans la piscine du réacteur ou hors d'eau, sur un stand de réparation.

Dans ce but, on dispose une pluralité d'armatures métalliques en vis-à-vis d'une surface d'un élément de guidage ou de positionnement sur lequel on effectue le contrôle, dans des positions circonférentielles différentes et déterminées autour de l'axe de symétrie de l'élément de guidage ou de positionnement et on mesure la capacité des condensateurs constitués par les armatures métalliques, la surface de l'élément de guidage et une couche de fluide diélectrique, tel que de l'air ou de l'eau séparant l'armature de la surface de l'élément de guidage, chacune des armatures restant dans sa position circonférentielle déterminée, par rapport à la surface de l'élément de guidage ou de positionnement.

L'invention est également relative à des dispositifs de contrôle dimensionnel et géométrique permettant de mettre en oeuvre le procédé suivant l'invention, dans le cas des équipements internes supérieurs d'un réacteur nucléaire à eau sous pression.

Afin de bien faire comprendre l'invention, on va maintenant décrire à titre d'exemple non limitatif, en se référant aux figures jointes en annexe, plusieurs modes de réalisation de dispositifs permettant de mettre en oeuvre le procédé de contrôle dimensionnel suivant l'invention.

La figure 1 est une vue en coupe par un plan vertical de la cuve d'un réacteur nucléaire à eau sous pression.

La figure 2 est une vue en élévation d'un tube de guidage des équipements internes supérieurs de la cuve du réacteur nucléaire représenté sur la figure 1.

La figure 2A est une vue en coupe suivant AA de la figure 2.

La figure 2B est une vue en coupe suivant BB de la figure 2.

La figure 2C est une vue en coupe suivant CC de la figure 2.

La figure 2D est une vue en coupe suivant DD de la figure 2.

La figure 2E est une vue en coupe suivant EE de la figure 2.

La figure 3 est une vue à plus grande échelle du détail 3 de la figure 2.

La figure 4A est une vue en coupe d'un canal d'un élément de guidage périphérique dans lequel est introduit un dispositif de contrôle dimensionnel et géométrique suivant l'invention.

La figure 4B est une vue en coupe d'un canal intermédiaire d'un élément de guidage dans lequel est introduit un dispositif de contrôle suivant l'invention.

La figure 5 est une vue en élévation d'un ensemble de contrôle dimensionnel et géométrique suivant l'invention.

La figure 6 est une vue en élévation de la partie inférieure d'un tube de guidage comportant les broches de positionnement de ce tube de guidage.

La figure 7 est une vue de dessus d'un dispositif permettant de mesurer l'entraxe entre les deux broches du tube de guidage représenté sur la figure 6, au niveau des parties fendues de ces broches.

La figure 8 est une vue de dessus d'un dispositif permettant de mesurer l'entraxe des broches du tube de guidage représenté sur la figure 6, dans leur partie pleine.

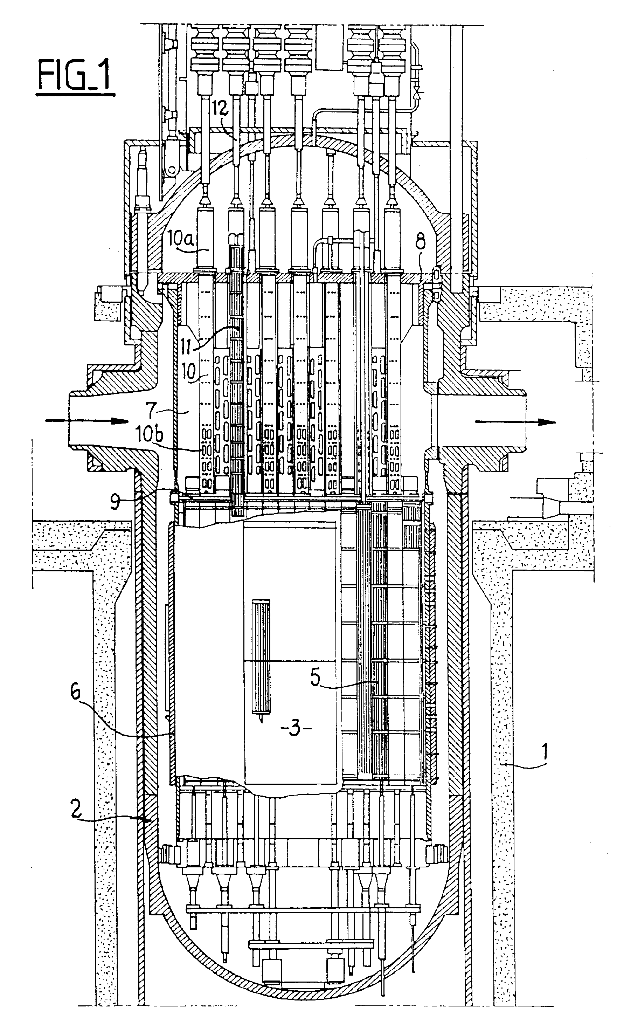

Sur la figure 1, on voit la structure 1 d'un réacteur nucléaire à eau sous pression sur laquelle repose la cuve 2 du réacteur renfermant le coeur 3 constitué par des assemblages combustibles 5 prismatiques disposés avec leurs axes dans la direction verticale. Le coeur 3 est placé à l'intérieur des équipements internes inférieurs 6 comportant en particulier un cloisonnement entourant le coeur.

Au-dessus du coeur 3 sont disposés les équipements internes supérieurs 7 comportant une plaque supérieure 8, une plaque inférieure 9 constituant la plaque supérieure du coeur et des tubes de guidage 10.

Chacun des tubes de guidage comporte une partie supérieure 10a fixée sur la plaque supérieure 8 des équipements internes supérieurs et une partie inférieure 10b engagée par l'intermédiaire de broches de guidage dans la plaque inférieure 9 des équipements internes supérieurs.

Les grappes de contrôle 11 du réacteur nucléaire qui peuvent être déplacées verticalement par des dispositifs de commande 12 sont mobiles, chacune entre une position supérieure à l'intérieur d'un tube de guidage 10 des équipements internes supérieurs et une position inférieure où ils sont engagés complètement dans un assemblage combustible 5.

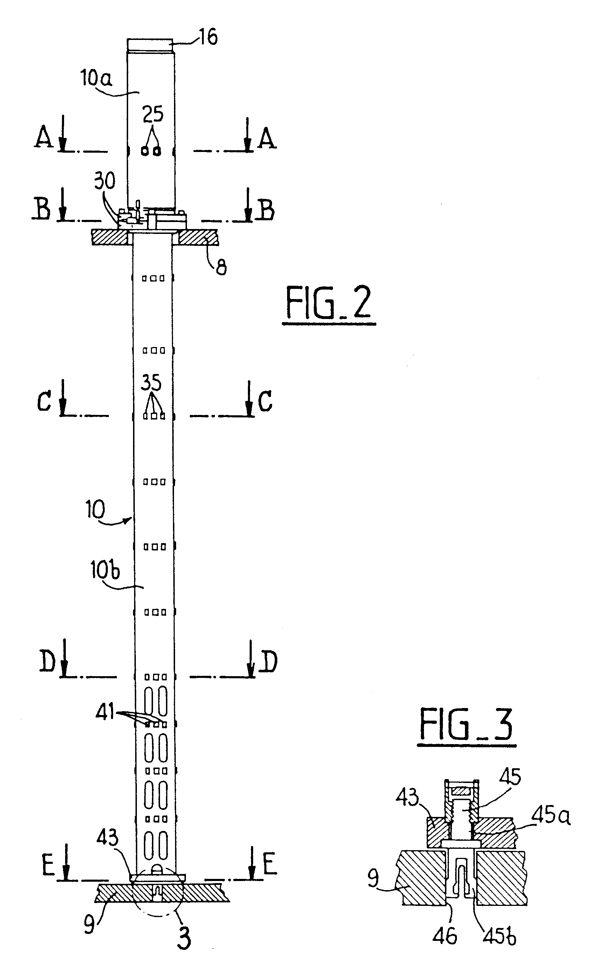

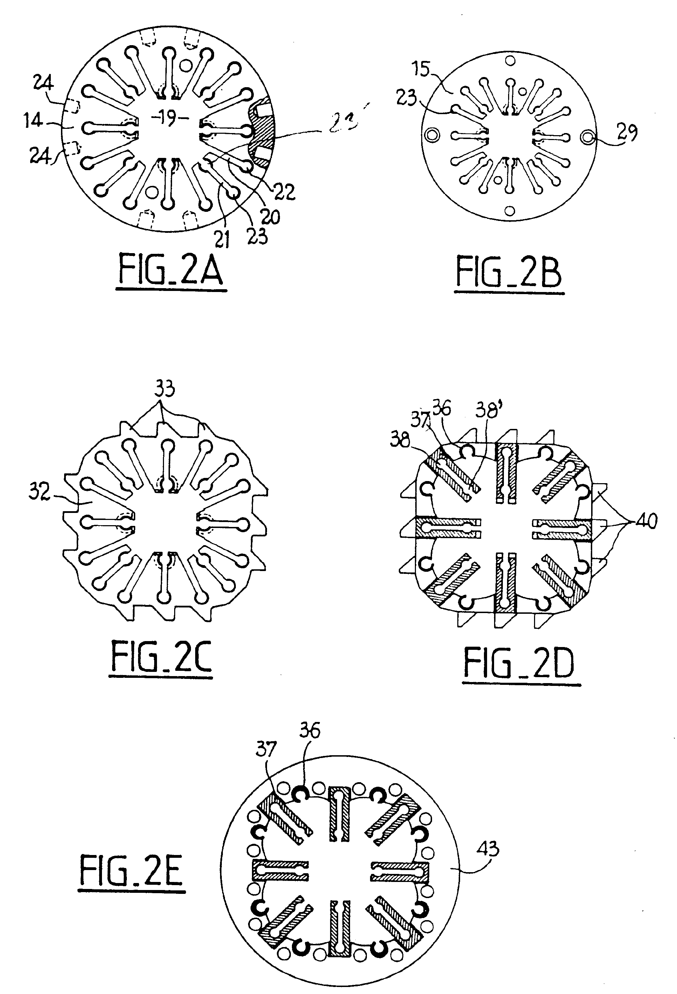

Sur la figure 2, on voit un tube de guidage 10 des équipements internes supérieurs du réacteur nucléaire représenté sur la figure 1.

Le tube de guidage 10 comporte une partie supérieure 10a fixée par des vis sur la plaque supérieure 8 des équipements internes dans laquelle sont disposées des cartes de guidage, respectivement 14 et 15, représentées sur les figures 2A et 2B.

La partie 10a du tube de guidage est fermée à sa partie supérieure par une plaque 16 comportant une ouverture permettant le passage du pommeau de la grappe reliée à la tige du dispositif de commande de déplacement 12 de cette grappe.

Chacune des cartes de guidage 14 et 15 comporte une ouverture centrale 19 de passage du pommeau de la grappe et des ouvertures radiales 20 et 21 permettant le passage des membranes et des crayons absorbants.

Les ouvertures 20 comportent chacune un canal de guidage 22 à leur extrémité permettant le guidage d'un crayon absorbant périphérique de la grappe fixé à l'extrémité de la membrane correspondante.

Chacune des ouvertures 21 comporte un canal de guidage 23 à son extrémité permettant le guidage d'un crayon périphérique de la grappe et un canal de guidage intermédiaire 23' permettant le guidage d'un crayon interne de la grappe de crayons absorbants. Chacune des grappes comporte seize crayons périphériques et huit crayons internes.

Chacune des cartes de guidage comporte donc huit ouvertures radiales telles que 20 et huit ouvertures radiales telles que 21.

La carte de guidage 14 est fixée par des vis 25 engagées dans des trous filetés 24 usinés sur la partie périphérique de la carte de guidage dans une direction radiale.

La carte de guidage 15 est fixée par des vis engagées dans des trous 29 de la carte et fixées dans des plaques de fixation 30 de la partie supérieure 10a du tube-guide 10 sur la plaque supérieure 8 des équipements internes.

Dans la partie 10b du tube de guidage sont fixées à intervalles réguliers des cartes de guidage 32 à section sensiblement carrée comportant à leur périphérie des ergots de fixation 33 qui sont engagés dans des ouvertures 35 de l'enveloppe de la partie inférieure 10b du tube de guidage à section carrée. Cette partie 10b est constituée de deux demi-capots qui peuvent être assemblés après engagement des cartes de guidage.

Les cartes de guidage 32 de forme carrée comporte des ouvertures radiales semblables aux ouvertures des cartes supérieures 14 et 15.

Dans sa partie inférieure, le tube de guidage 10b comporte des éléments de guidage continus 36 et 37 constitués respectivement par des canaux de guidage usinés dans l'enveloppe à section carrée du tube de guidage continu et des goussets comportant deux canaux de guidage 38, 38', disposés dans une direction radiale par rapport à l'enveloppe du tube de guidage continu.

L'enveloppe du dispositif de guidage continu comporte des ergots 40 qui sont engagés dans des ouvertures 41 traversant la paroi des deux demi-enveloppes de la partie inférieure du tube 10b.

La partie inférieure des dispositifs de guidage 36 et 37 est fixée sur la bride inférieure 43 reposant sur la plaque inférieure des équipements internes supérieurs 9.

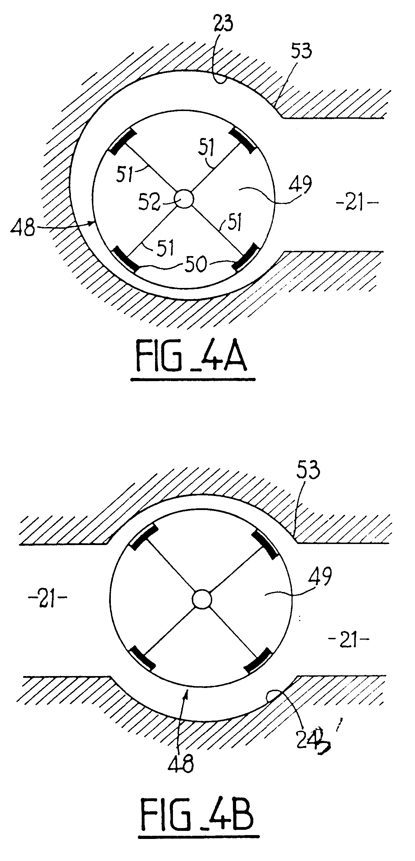

Comme il est visible sur la figure 3, des broches de guidage telles que la broche 45 assurent la fixation et la mise en place de la partie inférieure du tube de guidage 10 sur la plaque supérieure de coeur 9 constituant la plaque inférieure des équipements internes.

La broche 45 comporte une partie pleine 45a et une partie fendue 45b, la partie 45a étant engagée dans la bride 43 et la partie 45b dans une ouverture 46 de la plaque 9.

Deux broches de centrage sont fixées en des positions diamétralement opposées, sur la bride 43.

Sur la figure 4A, on voit la surface intérieure d'un canal de guidage 23 disposé à l'extrémité d'une ouverture 21 d'une carte de guidage telle que représentée sur l'une des figures 2A, 2B ou 2C.

A l'intérieur du canal de guidage 23 est placé un dispositif de mesure suivant l'invention 48 constitué par une tige 49 en un matériau isolant dans laquelle sont placées des armatures métalliques 50. Un conducteur électrique 51 est relié à chacune des armatures 50 qui sont disposées à 90° les unes des autres à la périphérie de la tige 49.

Les conducteurs 51 passent dans un canal central 52 de la tige 49 pour être reliés à un circuit de mesure permettant de déterminer la capacité de chacun des condensateurs constitués par une armature 50, la surface intérieure du canal de guidage 23 et la couche de fluide diélectrique qui peut être de l'eau ou de l'air remplissant le canal 23.

Sur la figure 4B, on a représenté le dispositif de mesure 48 à l'intérieur d'un canal de guidage 23' situé en position intermédiaire et assurant le guidage d'un crayon situé vers l'intérieur de la grappe de crayons absorbants.

Dans le cas de la mesure représentée sur la figure 4A, aussi bien que dans le cas de la mesure représentée sur la figure 4B, le dispositif 48 permet de déterminer l'usure du canal de guidage correspondant 23 ou 23'. On fait circuler la tige 49 suivant la direction axiale du canal et on mesure les variations de capacité des différents capteurs traduisant la distance du capteur par rapport à l'alésage à mesurer.

On effectue au préalable l'étalonnage du dispositif de mesure en le faisant passer dans l'alésage d'une bague étalon.

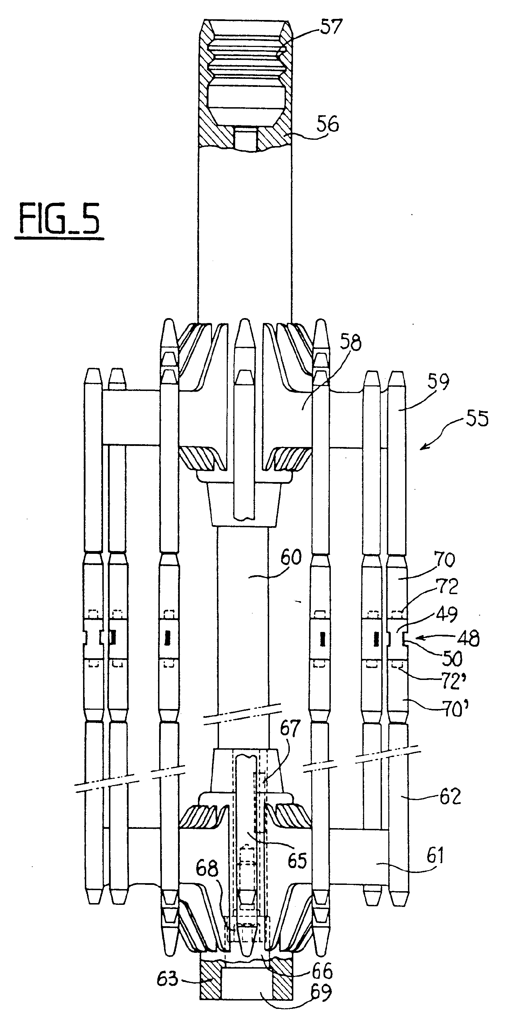

Sur la figure 5, on a représenté l'ensemble d'un dispositif de mesure permettant de contrôler les canaux de guidage d'un tube-guide des équipements internes supérieurs d'un réacteur nucléaire.

L'ensemble de mesure désigné de manière générale par le repère 55 présente la structure générale d'une grappe de contrôle qui peut être introduite dans un assemblage combustible pour régler la réaction nucléaire.

Ce dispositif comporte un pommeau supérieur 56 comportant des moyens d'accrochage rapide 57 à un moyen de déplacement dans la direction verticale qui peut être constitué par une perche dont la partie inférieure comporte des éléments de raccord au pommeau 56.

Sur le pommeau 56 sont fixées des membranes 58 disposées dans des directions radiales et analogues aux membranes de support des crayons absorbants d'une grappe de contrôle.

Sur les membranes 58 sont fixées, à la place des crayons absorbants d'une grappe de contrôle, des tiges 59, dans des positions correspondant au réseau des tubes-guides d'un assemblage. Certaines membranes portent une tige 59 à leur extrémité et les autres membranes deux tiges, l'une étant située à l'extrémité de la membrane et l'autre dans une position intermédiaire.

L'ensemble 55 comporte également un arbre central 60 assurant la jonction entre la partie supérieure de l'ensemble 55 constitué par le pommeau 56 et les membranes 58 et une partie inférieure comportant des membranes 61 dans des positions indentiques à celles des membranes 58.

Les membranes 61 portent des tiges 62 qui se trouvent dans la position des éléments absorbants d'une grappe de contrôle.

Ces membranes 61 sont reliées à un pommeau 63 sur lequel elles sont fixées dans des directions radiales.

Les membranes 58, le pommeau 56 et les tiges 59 constituent un premier ensemble supérieur qui doit être relié à l'ensemble inférieur constitué par le pommeau 63, les membranes 61 et les tiges 62.

La liaison entre l'ensemble supérieur et l'ensemble inférieur est assurée par l'arbre 60 comportant une partie inférieure à faible diamètre 65 constituant une tige d'assemblage qui est engagée dans l'alésage 66 du pommeau inférieur 63. Cette tige 65 permet de fixer l'orientation de la partie inférieure de l'ensemble de détection 55 par rapport à la partie supérieure, grâce à une clavette 67 engagée dans une rainure longitudinale usinée dans l'alésage du pommeau 63.

Une vis d'assemblage 68 peut être introduite dans l'alésage du pommeau pour être vissée à l'intérieur d'un trou taraudé usiné à l'extrémité de la tige 65 constituant l'extrémité de l'arbre d'assemblage 60. La tête de la vis 68 à six pans creux vient se loger dans un lamage constituant un élargissement de l'alésage du pommeau.

Le pommeau inférieur 63 comporte une surface profilée 69 constituant un carré d'orientation pour l'ensemble de contrôle 55.

Entre chacune des tiges 59 et 62 en vis-à-vis est placé un support 70 dans lequel est monté, en position centrale, un dispositif de contrôle capacitif 48 tel que représenté sur les figures 4A ou 4B. Ce dispositif comporte en particulier des armatures métalliques 50 disposées en retrait par rapport à la surface extérieure d'un support isolant 49.

Les dispositifs de contrôle 48 sont assemblés aux éléments de support 70 et 70' par l'intermédiaire de tenons 72, 72' venant s'engager dans des ouvertures de forme correspondante des éléments de support 70 et 70'.

Lors d'un arrêt du réacteur nucléaire pour rechargement et contrôle, les équipements internes supérieurs de ce réacteur sont placés sur un support dans la piscine du réacteur nucléaire.

Un dispositif porteur mobile peut se déplacer de manière extrêmement précise, de façon à venir se positionner sous la plaque inférieure 9 des équipements internes supérieurs, dans l'alignement d'un tube de guidage quelconque de ces équipements internes supérieurs. Ce porteur peut également se placer dans une position située dans la piscine, en dehors de la zone occupée par les équipements internes supérieurs.

L'ensemble de contrôle 55 raccordé à une perche de manutention est descendu dans l'alignement de l'axe de référence du porteur et orienté de manière à engager le carré d'entraînement du pommeau inférieur 63 de l'ensemble 55 sur un élément correspondant du porteur. Des moyens de maintien de l'ensemble 55 sur le porteur peuvent être actionnés à distance.

La perche reliée au pommeau supérieur de l'ensemble 55 est désolidarisée de celui-ci et le porteur vient positionner l'axe de référence du dispositif de contrôle sous la colonne de guidage dont on désire contrôler l'usure des guides de cartes.

La perche est introduite dans la direction verticale, dans l'alésage de la plaque 16 du tube de guidage 10 correspondant. La perche est descendue suivant la direction verticale de la colonne de guidage et ressort sous la plaque inférieure des équipements internes de manière à se raccorder sur les moyens d'accrochage 57 du pommeau 56. Ce raccordement établit en même temps la connexion des éléments de transmission des mesures reliés aux armatures 50 et transitant par l'intérieur des supports 70 et des tiges 59 pour parvenir au pommeau 56.

On peut également utiliser une fibre optique pour transmettre les informations aux moyens de mesure et de contrôle situés au niveau du plancher de service de la piscine, dans le cas de mesures sous eau et un ensemble de moyens électroniques situés dans le pommeau 56.

Ces éléments de transmission sont raccordés à un module d'enregistrement des mesures placé sur le plancher de service de la piscine du réacteur.

L'ensemble de contrôle 55 est fixé sur le porteur par l'intermédiaire de dispositifs de fixation commandables à distance.

Lorsque la perche est raccordée, on réalise à distance la désolidarisation du porteur et de l'ensemble de contrôle 55 puis on déplace, dans la direction verticale, l'ensemble 55 à l'intérieur du tube de guidage correspondant en utilisant la perche fixée au pommeau 56.

L'opération de contrôle est réalisée en déplaçant l'ensemble de contrôle 55 verticalement dans les dispositifs de guidage, afin d'enregistrer l'ensemble des mesures relatives aux canaux de guidage continu et aux cartes de guidage. L'enregistrement des variations de capacité permet de déterminer la variation de la distance entre l'armature du capteur et l'alésage, suivant toute la hauteur du tube de guidage.

Les tiges 59 et 62 et les supports 70 et 70' entre lesquels se trouvent les capteurs 48 ont une longueur totale de 300 mm chacune, si bien que le guidage est assuré simultanément dans deux cartes de guidage au minimum.

Lorsque la mesure est terminée dans un tube de guidage des équipements internes supérieurs, le dispositif 55 est descendu sur son porteur où il est à nouveau raccordé grâce aux éléments de fixation à distance et la perche est déconnectée.

On utilise le porteur pour placer l'ensemble de contrôle sous un nouveau tube de guidage, afin d'effectuer le contrôle de l'usure dans ce tube de guidage.

Lorsque l'ensemble des colonnes de guidage a été contrôlé, le porteur sur lequel est monté l'ensemble de contrôle 55 est placé en dehors de la zone des équipements internes supérieurs et cet ensemble 55 est extrait de la piscine en utilisant la perche de manutention.

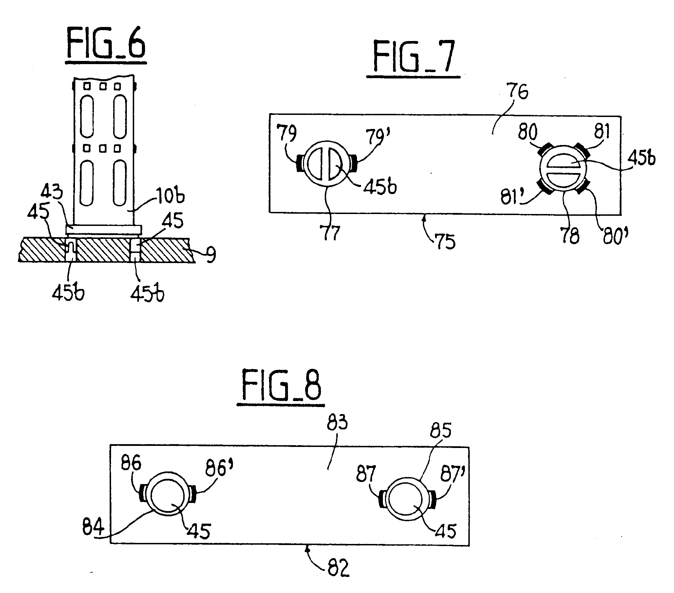

Sur la figure 6, on voit le mode de fixation de la partie inférieure 10b d'un tube de guidage sur la plaque inférieure 9 des équipements internes supérieurs. Le tube de guidage est fixé par l'intermédiaire d'une bride 43 reposant sur la plaque 9, dans laquelle sont fixées deux broches de guidage 45 dans des positions diamétralement opposées et avec leur partie fendue 45b dans des orientations situées à 90° l'une de l'autre.

Les broches 45 sont engagées par leur partie inférieure fendue dans des ouvertures 46 de la plaque 9 comme il est visible sur la figure 3.

Sur la figure 7, on voit un dispositif de contrôle 75 suivant l'invention permettant de contrôler l'entraxe des broches 45 dans leur partie fendue 45b.

Le dispositif 75 comporte une ossature 76 en matériau isolant dans laquelle sont prévus deux alésages 77 et 78 dont l'entraxe correspond à l'entraxe théorique des broches 45.

Dans la paroi de l'alésage 77 et légèrement en retrait par rapport à la surface intérieure de cet alésage sont disposées deux armatures 79 et 79' dans des positions sensiblement parallèles à la fente de la broche 45b.

Dans l'alésage 78 et dans des positions légèrement en retrait par rapport à la surface intérieure de cet alésage sont d'autre part disposées quatre armatures 80, 80' et 81, 81', légèrement en retrait par rapport à la surface intérieure de l'alésage et dans des positions placées à 45° par rapport à la fente de la partie 45b de la broche.

La mesure peut être effectuée sur les broches 45, pour déterminer leur entraxe, lorsque le tube de guidage 10 a été extrait de la plaque inférieure 9 des équipements internes supérieurs du réacteur.

Les alésages 77 et 78 sont introduits à distance, autour des parties fendues 45b des broches 45 et on effectue des mesures de capacité des condensateurs constitués par les armatures 79, 79', la surface extérieure de la partie fendue 45b de la broche correspondante et la couche de fluide diélectrique intercalée entre les armatures 79, 79' et la surface extérieure de la partie fendue 45b de la broche 45.

De même, on effectue des mesures de capacité des condensateurs constitués par les armatures 80, 80', 81 et 81', la surface extérieure de la broche 45 correspondante dans sa partie fendue 45b et la couche de fluide diélectrique comprise entre les armatures et la surface extérieure de la broche dans sa partie fendue.

La comparaison des mesures de capacité obtenues permet de déterminer avec une très grande précision l'écart de l'entraxe des broches par rapport à l'entraxe théorique défini par les alésages 77 et 78.

Sur la figure 8, on a représenté un dispositif 82 qui peut être utilisé pour déterminer l'entraxe des broches 45 dans leur partie pleine située au-dessus de la partie fendue 45b.

Le dispositif 82 comporte un corps en matière isolante 83 dans lequel sont usinés des alésages 84 et 85 dont l'entraxe correspond à l'entraxe théorique des broches de centrage 45.

Des armatures 86 et 86' sont disposées légèrement en retrait dans la paroi intérieure de l'alésage 84 et de même des armatures métalliques 87 et 87' sont disposées légèrement en retrait dans la surface de l'alésage 85.

Les armatures 86 et 86' d'une part et 87 et 87' d'autre part sont dans des positions diamétralement opposées par rapport aux alésages correspondants.

Le principe de la mesure est identique au principe de la mesure utilisant le dispositif 75 représenté sur la figure 7.

Dans tous les cas, les mesures et contrôles peuvent être effectués à distance avec une très grande précision, que les équipements internes supérieurs du réacteur soient plongés dans l'eau de la piscine du réacteur ou se trouvent sous air dans un stand de réparation et de contrôle.

Il est bien évident que le procédé suivant l'invention peut être mis en oeuvre en utilisant des dispositifs différents de ceux qui ont été décrits et qui peuvent être adaptés aux éléments de guidage ou de positionnement des équipements internes supérieurs du réacteur dont on veut effectuer le contrôle dimensionnel et géométrique.

L'invention peut s'appliquer au contrôle d'éléments de guidage ou de positionnement d'équipements internes supérieurs différents des cartes ou dispositifs de guidage continus ou encore des broches de fixation ou de guidage des tubes de ces équipements internes.

## Revendications

1. Procédé de contrôle dimensionnel et géométrique d'éléments de guidage et de positionnement (22, 23, 24, 38, 38', 45) des équipements internes supérieurs d'un réacteur nucléaire à eau sous pression, comportant un axe de symétrie, par mesure de capacités entre un moyen de mesure et une surface des éléments de guidage et de positionnement et comparaison des valeurs mesurées, caractérisé par le fait :
- qu'on dispose une pluralité d'armatures métalliques (50, 79, 79', 80, 80', 81, 81', 86, 86', 87, 87') en vis-à-vis d'une surface d'un élément de guidage ou de positionnement sur lequel on effectue le contrôle, dans des positions circonférentielles différentes et déterminées autour de l'axe de symétrie de l'élément de guidage ou de positionnement,
- et qu'on mesure la capacité des condensateurs constitués par les armatures métalliques, la surface de l'élément de guidage et une couche de fluide diélectrique tel que de l'air ou de l'eau séparant les armatures de la surface de l'élément de guidage, chacune des armatures restant dans sa position circonférentielle déterminée par rapport à la surface de l'élément de guidage ou de positionnement.

2. Procédé suivant la revendication 1, caractérisé par le fait qu'on déplace au moins un ensemble de contrôle (48) comportant une pluralité d'armatures (50), à l'intérieur d'au moins un canal de guidage, d'un tube guide des équipements internes supérieurs du réacteur, dans la direction verticale, suivant l'axe du canal et qu'on mesure la capacité des condensateurs pendant le déplacement de l'ensemble de contrôle (48).

3. Procédé suivant la revendication 1, caractérisé par le fait qu'on place autour des broches de guidage (45) d'un tube des équipements internes supérieurs des ensembles d'armatures métalliques (79, 79', 80, 80', 81, 81') portés par un support isolant (76), les armatures métalliques étant disposées légèrement en retrait dans deux alésages dont l'entraxe correspond à l'entraxe théorique des broches de guidage (45) du tube (10) des équipements internes supérieurs.

4. Dispositif (55) de contrôle dimensionnel et géométrique des éléments de guidage d'un tube de guidage d'une grappe de contrôle dans les équipements internes supérieurs d'un réacteur nucléaire, caractérisé par le fait qu'il est constitué sous la forme d'une grappe comportant des tiges (59, 62) parallèles disposées suivant un réseau reproduisant le réseau des canaux de guidage d'un tube des équipements internes supérieurs d'un réacteur nucléaire, des dispositifs de mesure capacitifs (48) comportant des armatures métalliques (50) étant disposés suivant la longueur des tiges.

5. Dispositif (55) suivant la revendication 4, caractérisé par le fait qu'il comporte un pommeau supérieur (56) comportant des moyens de liaison rapide (57) à une perche de manutention et un pommeau inférieur (63) comportant des moyens de fixation sur un porteur susceptible de se déplacer sur le fond de la piscine d'un réacteur nucléaire.

6. Dispositif (55) suivant la revendication 5, caractérisé par le fait que le pommeau supérieur (56) renferme les moyens électroniques de traitement des signaux de mesure des dispositifs capacitifs (48) et qu'une fibre optique transmet les informations à des moyens de mesure et de contrôle situés au niveau du plancher de service de la piscine.

7. Procédé de contrôle dimensionnel et géométrique des canaux de guidage d'un tube des équipements internes supérieurs d'un réacteur nucléaire, caractérisé par le fait qu'on place les équipements internes supérieurs sur un support reposant sur le fond de la piscine du réacteur,
- qu'on descend dans la piscine, à proximité des équipements internes supérieurs, un ensemble de contrôle dimensionnel (55) de manière à le placer sur un dispositif mobile sur le fond de la piscine,
- qu'on assure la liaison à distance entre l'ensemble de contrôle (55) et le porteur,
- qu'on déplace le porteur et l'ensemble de mesure pour le placer à la verticale d'un tube de guidage des équipements internes supérieurs du réacteur, sous ces équipements internes,
- qu'on introduit une perche de manutention dans le tube de guidage correspondant,
- qu'on relie la perche à l'ensemble de contrôle (55),
- et qu'on effectue le contrôle en déplaçant à la verticale et vers le haut, le dispositif (55) à l'intérieur du tube de guidage des équipements internes supérieurs.

8. Dispositif (75) de contrôle de l'entraxe des broches de guidage (45) d'un tube de guidage des équipements internes supérieurs d'un réacteur nucléaire, caractérisé par le fait qu'il comporte un support isolant (76) dans lequel sont pratiqués deux alésages (77, 78), dont l'entraxe correspond à l'entraxe théorique des broches du tube de guidage, dans la surface intérieure desquels sont disposés en retrait des armatures métalliques (79, 79', 80, 80', 81, 81') constituant des dispositifs de mesure capacitifs.

9. Dispositif (75) suivant la revendication 8, caractérisé par le fait que deux armatures (79, 79') sont placées dans des positions diamétralement opposées dans l'un des alésages (77) et quatre armatures (80, 80', 81, 81') dans le second alésage (78) de l'élément isolant (76).

10. Dispositif (82) suivant la revendication 9, caractérisé par le fait que deux armatures métalliques (86, 86', 87, 87') sont disposées dans des positions diamétralement opposées dans chacun des alésage (84, 85) traversant l'élément isolant (83).

## Patentansprüche

1. Verfahren zur Dimensions- und Geometrieprüfung von eine Symmetrieachse aufweisenden Führungs- und Positionierungselementen (22, 23, 24, 38, 38', 45) der oberen Einbauten eines Druckwasser-Kernreaktors durch Messen der Kapazitäten zwischen einer Meßeinrichtung und einer Oberfläche der Führungs- und Positionierungselemente und Vergleichen der Meßwerte,
dadurch gekennzeichnet, daß
- mehrere Metallbeschläge (50, 79, 79', 80, 80', 81, 81', 86, 86', 87, 87') gegenüber einer Oberfläche eines Führungs- oder Positionierungselements, das geprüft wird, an verschiedenen und um die Symmetrieachse des Führungs- oder Positionierungselements festgelegten Umfangspositionen angeordnet werden,
- und daß die Kapazität der Kondensatoren, die durch die Metallbeschläge, die Oberfläche des Führungselements und eine Schicht eines dielektrischen Fluids wie Luft oder Wasser, die die Beschläge von der Oberfläche des Führungselements trennt, gemessen wird, wobei jeder der Beschläge an seiner in bezug auf die Oberfläche des Führungs- oder Positionierungselements bestimmten Position verbleibt.

2. Verfahren nach Anspruch 1, dadurch gekennzeichnet, daß wenigstens eine mehrere Beschläge (50) aufweisende Prüfanordnung (48) im Inneren wenigstens eines Führungskanals eines Führungsrohres der oberen Einbauten des Reaktors in vertikaler Richtung entlang der Achse des Kanals verschoben wird, und daß die Kapazität der Kondensatoren während des Verschiebens der Prüfeinheit (48) gemessen wird.

3. Verfahren nach Anspruch 1, dadurch gekennzeichnet, daß um Führungsstifte (45) eines Rohres der oberen Einbauten von einer isolierenden Stütze (70) getragene Metallbeschlageinheiten (79, 79', 80, 80', 81, 81') angeordnet sind, wobei die Metallbeschläge in geringfügig zurückspringend in zwei Bohrungen angeordnet sind, deren Achsabstand dem theoretischen Achsabstand der Führungsstifte (45) des Rohres (10) der oberen Einbauten entspricht.

4. Vorrichtung (55) zur Dimensions- und Geometrieprüfung von Führungselementen eines Führungsrohres einer Prüfanordnung in den oberen Einbauten eines Kernreaktors, dadurch gekennzeichnet, daß sie in Form einer Anordnung aus parallelen Stangen (59, 62) ausgebildet ist, die in einem Netzwerk angeordnet sind, das dem Führungskanalnetzwerk eines Rohres der oberen Einbauten eines Kernreaktors nachgebildet ist, wobei entlang der Längenerstreckung der Stangen mit Metallbeschlägen (50) versehene kapazitive Meßvorrichtungen (48) angeordnet sind.

5. Vorrichtung (55) nach Anspruch 4, dadurch gekennzeichnet, daß sie eine obere Manschette (56) mit Einrichtungen (57) zum schnellen Verbinden mit einer Handhabungsstange und eine untere Manschette (63) mit Einrichtungen zur Befestigung an einen Träger aufweist, der auf dem Boden eines Kernreaktorbeckens verschiebbar ist.

6. Vorrichtung (55) nach Anspruch 5, dadurch gekennzeichnet, daß die obere Manschette (56) die elektronischen Einrichtungen zur Verarbeitung der Meßsignale der kapazitiven Meßvorrichtungen (48) beinhaltet, und daß eine optische Faser die Informationen an Meß- und Regeleinrichtungen weiterleitet, die auf der Ebene der Reaktorbecken-Bedienungsbühne angeordnet sind.

7. Verfahren zur Dimensions- und Geometrieprüfung von Führungskanälen eines Rohres der oberen Einbauten eines Kernreaktors, dadurch gekennzeichnet,
- daß die oberen Einbauten auf einem Träger angeordnet werden, der auf dem Boden des Reaktorbeckens abgestützt ist,
- daß in die Nähe der oberen Einbauten eine Dimensionsprüfeinheit (55) in das Becken abgesenkt wird, derart, daß die Einheit auf einer bewegbaren Vorrichtung auf dem Boden des Beckens angeordnet wird,
- daß die Fernverbindung zwischen der Prüfanordnung (55) und dem Träger hergestellt wird,
- daß der Träger und die Meßanordnung verschoben wird, um sie in der Vertikalen eines Führungsrohres der oberen Einbauten des Reaktors unterhalb diese Einbauten anzuordnen,
- daß in das entsprechende Führungsrohr eine Handhabungsstange eingeführt wird,
- daß die Stange mit der Prüfanordnung (55) verbunden wird,
- und daß die Prüfung durch Verschieben der Vorrichtung (55) vertikal nach oben im Inneren des Führungsrohrs der oberen Einbauten erfolgt.

8. Vorrichtung (75) zum Prüfen des Achsabstandes der Führungsstifte (45) eines Führungsrohres der oberen Einbauten eines Kernreaktors, dadurch gekennzeichnet, daß sie eine isolierende Stütze (76) aufweist, in der zwei Bohrungen (77, 78) ausgebildet sind, deren Achsabstand dem theoretischen Achsabstand der Führungsstifte der Führungsrohre entsprechen und in deren Innenflächen Metallbeschläge (79, 79', 80, 80', 81, 81') zurückspringend angeordnet sind, welche kapazitive Meßvorrichtungen bilden.

9. Vorrichtung (75) nach Anspruch 8, dadurch gekennzeichnet, daß zwei Beschläge (79, 79') in einer der Bohrungen (77) an diametral gegenüberliegenden Stellen und vier Beschläge (80, 80', 81, 81') in der zweiten Bohrung (78) des isolierenden Elements (76) angeordnet sind.

10. Vorrichtung (82) nach Anspruch 9, dadurch gekennzeichnet, daß in jeder der das isolierende Element (83) durchsetzenden Bohrungen (84, 85) zwei Metallbeschläge (86, 86', 87, 87') an diametral gegenüberliegenden Stellen angeordnet sind.

## Claims

1. Process for dimensional and geometrical checking of guide and positioning members (22, 23, 24, 38, 38', 45) of the upper internal fittings in a pressurized water nuclear reactor, having an axis of symmetry, by measuring the capacity between a measuring means and a surface of the guide and positioning member and comprising the measured values, characterised in that a plurality of metal plates (50, 79, 79', 80, 80', 81, 81', 86, 86', 87, 87') are placed opposite a surface of a guide or positioning member on which the check is to be made in different, pre-determined circumferential positions about the axis of symmetry of the guide or positioning member, and the capacity of the capacitors formed by the metal plates, the surface of the guide member, and a layer of dielectric fluid, such as air or water, separating the plate from the surface of the guide member, is measured, each of the metal plates remaining in its predetermined circumferential position with respect to the surface of the guide or positioning member.

2. Process according to Claim 1, characterised in that at least one checking apparatus (48) provided with a plurality of plates (50) is moved in the vertical direction inside at least one guide channel inside a guide tube of the upper internal fittings of the reactor along the axis of the channel, and that the capacity of the capacitors is measured during the movement of the checking apparatus (48).

3. Process according to Claim 1, characterised in that assemblies of metal plates (79, 79', 80, 80', 81, 81') carried by an insulating support (76) are placed around the guide pins (45) of a tube of the upper internal equipment, the metal plates being slightly set back in two bores whose distance between centres corresponds to the theoretical distance between centres of the guide pins (45) of the tube (10) of the upper internal fittings.

4. Apparatus (55) for dimensional and geometrical checking of the guide members of a guide tube of a control bundle in the upper internal fittings of a nuclear reactor, characterised in that it is in the form of a bundle of parallel rods (59, 62) arranged in a grid pattern reproducing the network of the guide channels of a tube of the upper internal fittings of a nuclear reactor, capacitive measuring apparatuses (48) provided with metal plates (50) being interposed along the length of the rods.

5. Apparatus (55) according to Claim 4, characterised in that it has a top pommel (56) provided with means (57) for rapid connection to a handling pole, and a bottom pommel (63) provided with means for fastening on a carrier adapted to move along the bottom of the pool of a nuclear reactor.

6. Apparatus (55) according to Claim 5, characterised in that the top pommel (56) contains the electronic means for processing the measurement signals of the capacitive devices (48), and that an optical fibre transmits the information to measurement and checking means situated on the service floor of the pool.

7. Process for dimensional and geometrical checking of the guide channels of a tube of the upper internal fittings of a nuclear reactor, characterised in that the upper internal fittings are placed on a support resting on the bottom of the reactor pool,
- that a dimensional checking assembly (55) is lowered into the pool, close to the upper internal fittings, in such a way, as to place it on a device which is movable on the bottom of the pool,
- that the connection between the checking assembly (55) and the carrier is made by remote control,
- that the carrier and the measurement assembly are moved to bring them vertically in line with a guide tube of the upper internal fittings of the reactor, beneath said internal fittings,
- that a handling pole is introduced into the corresponding guide tube,
- that the pole is connected to the checking assembly (55),
- and that the check is made by moving the apparatus (55) vertically upwards inside the guide tube of the upper internal fittings.

8. Apparatus (75) for checking the distance between centres of the guide pins (45) of a guide tube of the upper internal fittings of a nuclear reactor, characterised in that it comprises an insulating support (76) in which two bores (77, 78) are formed whose distance between centres corresponds to the theoretical distance between centres of the pins of the guide tube, in the inner surface of which bores metal plates (79, 79', 80, 80', 81, 81') are disposed in a set back position, to form capacitive measuring devices.

9. Apparatus (75) according to Claim 8, characterised in that two plates (79, 79') are placed in diametrically opposite positions in one of the bores (77), and four plates (80, 80', 81, 81') in the second bore (78) of the insulating member (76).

10. Apparatus (82) according to Claim 9, characterised in that two metal plates (86, 86', 87, 87') are disposed in diametrically opposite positions in each bore (84, 85) passing through the insulating member (83).
